(19) Europäisches Patentamt
European Patent Office
Office européen des brevets

(11) EP 2 768 239 A1

(12) EUROPEAN PATENT APPLICATION

(43) Date of publication:
20.08.2014 Bulletin 2014/34

(51) Int Cl.:
H04R 1/08 (2006.01)  H04R 1/10 (2006.01)
H04M 1/19 (2006.01)

(21) Application number: 14154458.5

(22) Date of filing: 10.02.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 13.02.2013 JP 2013025246

(71) Applicant: Funai Electric Co., Ltd.
Daito-shi,
Osaka 574-0013 (JP)

(72) Inventor: Shimizu, Noriyuki
Daito-shi, Osaka 574-0013 (JP)

(74) Representative: Global IP Europe
Patentanwaltskanzlei
Pfarrstraße 14
80538 München (DE)

(54) **Earphone microphone**

(57)    An earphone microphone includes a main body housing, a differential microphone, and a speaker. The main body housing defines first and second acoustic spaces therewithin. The main body housing has a first opening that communicates the first acoustic space with an outside of the main body housing and a second opening that communicates the second acoustic space with the outside of the main body housing. The second acoustic space forms a Helmholtz resonator relative to sound propagating through the second opening. The differential microphone has first and second sound collection holes. The first and second sound collection holes communicate with the first and second acoustic spaces, respectively. The speaker is disposed in the second acoustic space.

FIG. 3

**Description**

CROSS-REFERENCE TO RELATED APPLICATIONS

This application claims priority to Japanese Patent Application No. 2013-025246 filed on February 13, 2013. The entire disclosure of Japanese Patent Application No. 2013-025246 is hereby incorporated herein by reference.

BACKGROUND

Field of the Invention

This invention generally relates to an earphone microphone. More specifically, the present invention relates to an earphone microphone having a speaker and a microphone.

Background Information

Generally, earphone microphones with a built-in speaker and microphone are well-known in the art. The user listens to a speaker's voice or other such sound outputted from the speaker through the earphone microphone, which is worn in the ear, while the user's voice inputted to the microphone is transmitted. Therefore, this earphone microphone is utilized in hands-free communication with a portable telephone or the like.

However, the sound emitted by the speaker into the external auditory canal reverberates at the user's eardrum, in the external auditory canal, etc., and is inputted as noise (an echo component) to the earphone microphone. Accordingly, the microphone built into the earphone microphone ends up picking up the echo component of the sound outputted from the speaker in addition to the user's voice. Therefore, a problem is that the echo component is admixed as noise into the sound transmitted from the earphone microphone.

Accordingly, there is a known earphone microphone having an echo canceling function, as in Patent Literature 1 (Japanese Unexamined Patent Application Publication No. 2007-201887), for example. With the earphone microphone in Patent Literature 1, two speakers and a microphone are built in. One speaker outputs sound such as a speaker's voice, and the other speaker outputs sound for canceling out the echo component of the sound outputted from the one speaker. The echo component of sound outputted from the one speaker, and the sound of the other speaker are inputted to the microphone, and the two cancel each other out to suppress the echo component.

SUMMARY

However, with the earphone microphone in Patent Literature 1, the plurality of the speakers is built into the main body housing. Thus, more space is need to install the speakers and their sound channels inside the main body housing. Therefore, it has been discovered that it is more difficult to make the main body housing compact. Also, since manufacturing costs are higher, another problem is the relatively high cost.

One aspect is to provide an earphone microphone that can be made compact and has an inexpensive echo suppression function.

In view of the state of the known technology, an earphone microphone includes a main body housing, a differential microphone, and a speaker. The main body housing defines first and second acoustic spaces therewithin. The main body housing has a first opening that communicates the first acoustic space with an outside of the main body housing and a second opening that communicates the second acoustic space with the outside of the main body housing. The second acoustic space forms a Helmholtz resonator relative to sound propagating through the second opening. The differential microphone has first and second sound collection holes. The first and second sound collection holes communicate with the first and second acoustic spaces, respectively. The speaker is disposed in the second acoustic space.

Also other objects, features, aspects and advantages of the present disclosure will become apparent to those skilled in the art from the following detailed description, which, taken in conjunction with the annexed drawings, discloses one embodiment of the earphone microphone.

BRIEF DESCRIPTION OF THE DRAWINGS

Referring now to the attached drawings which form a part of this original disclosure:

FIG. 1 is a perspective view of an earphone microphone in accordance with one embodiment;
FIG. 2 is a schematic diagram of the earphone microphone illustrated in FIG. 1, illustrating a state in which the earphone microphone has been mounted in a user external auditory canal;
FIG. 3 is a cross sectional view of a main body part of the earphone microphone illustrated in FIG. 1;
FIG. 4 is an axial view of the main body part as seen from inside of the user external auditory canal;
FIG. 5 is a side elevational view of the main body part;
FIG. 6A is an axial view of a main body part with another type of first and second openings;
FIG. 6B is an axial view of a main body part with further another type of first and second openings;
FIG. 6C is an axial view of a main body part with further another type of first and second openings;
FIG. 6D is an axial view of a main body part with yet another type of first and second openings;
FIG. 7 is a schematic diagram illustrating the principle behind the Helmholtz resonator;
FIG. 8 is a schematic diagram of the main body part in accordance with one embodiment, illustrating the principle for suppressing an echo component;
FIG. 9 is a block diagram of the earphone microphone, illustrating collection of output sound;
FIG. 10 is a graph illustrating the principle for suppressing the echo component;
FIG. 11 is a schematic diagram of the main body part in accordance with one embodiment, illustrating the principle for collecting input sound by a microphone;
FIG. 12 is a block diagram of the earphone microphone, illustrating collection of the input sound;
FIG. 13 is a graph illustrating the principle for collecting the input sound by a microphone; and
FIG. 14 is a graph illustrating microphone sensitivity characteristics in accordance with one embodiment.

DETAILED DESCRIPTION OF EMBODIMENTS

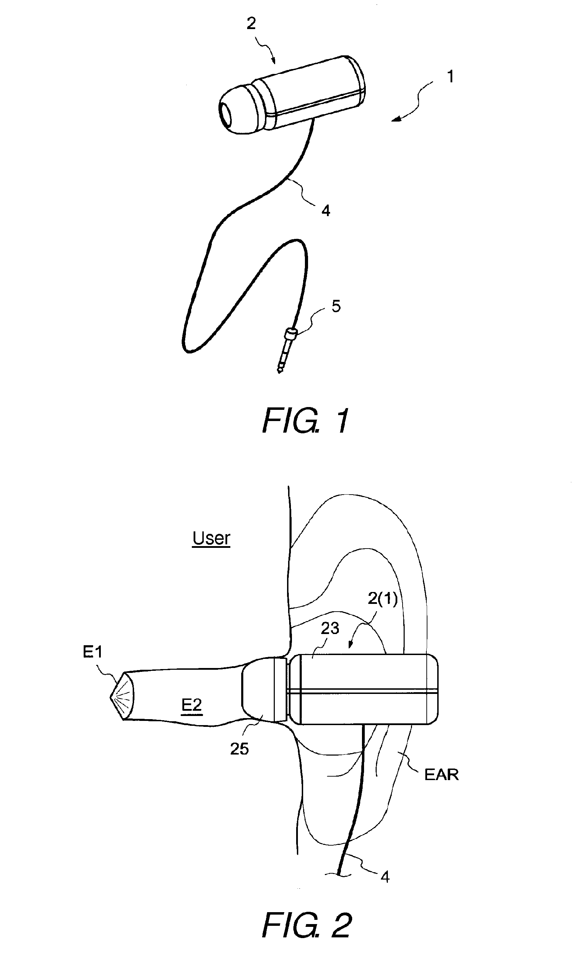

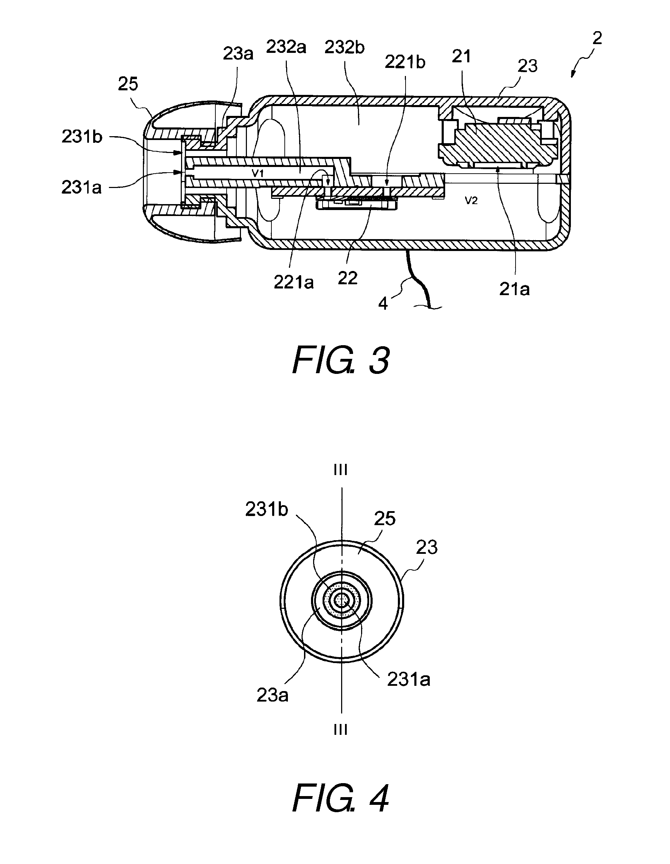

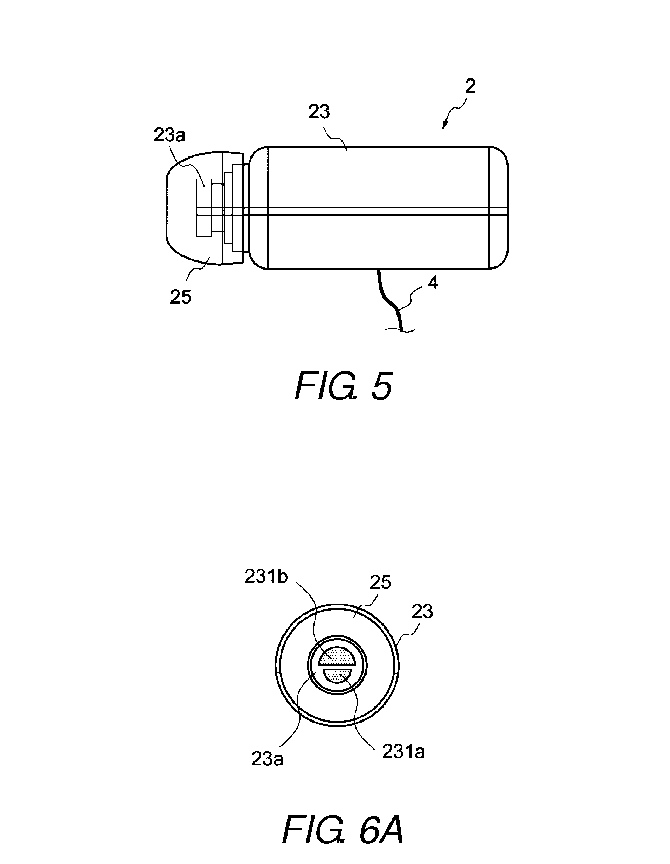

A selected embodiment will now be explained with reference to the drawings. It will be apparent to those skilled in the art from this disclosure that the following descriptions of the embodiment are provided for illustration only and not for the purpose of limiting the invention as defined by the appended claims and their equivalents.
Referring initially to FIG. 1, an earphone microphone 1 is illustrated in accordance with one embodiment. FIG. 1 is an oblique view of the earphone microphone 1. The earphone microphone 1 is an emitted sound collection device that is connected to a portable telephone or other such electronic device (not shown), for example. As shown in FIG. 1, the earphone microphone 1 includes a main body part 2, a cable 4, and a connector 5.
The main body part 2 is put in the user's ear, emits output sound, and collects input sound from an external sound source (such as the speaking voice of the user). The specific configuration of this main body part 2 will be discussed in detail below. The cable 4 is connected between the main body part 2 and the connector 5. The cable 4 is a signal line that transmits through the connector 5 signals going between the main body part 2 and an electronic device (not shown) to which the earphone microphone 1 is connected. The connector 5 is an input/output terminal connected to an interface of an electronic device (not shown).
FIG. 2 is a diagram of the state in which the earphone microphone 1 has been mounted in a user external auditory canal E2 of a user. As shown in FIG. 2, the earphone microphone 1 is put into an ear EAR of the user, and emits sound based on the sound signal outputted from an electronic device (not shown), toward an eardrum E1 of the user. Also, sounds made by the user are not limited to just those emitted from the mouth, and part of the sound is transmitted by the cranial bone, the facial muscles, etc., and is emitted from the eardrum E1 to the external auditory canal E2. The earphone microphone 1 collects these sounds such as the user's speaking voice (that is, input sound from an external sound source), and the produces a sound signal based on the collected sounds, and outputs this signal to the electronic device (not shown). There are no particular restrictions on the electronic device to which the earphone microphone 1 is connected.
Here, the output sound emitted from the earphone microphone 1 into the external auditory canal E2 of the user reverberates at the user's eardrum E1, the external auditory canal E2, etc., and is inputted as noise to the earphone microphone 1. This noise will hereinafter be called the echo component. As discussed below, the earphone microphone 1 has an echo suppression function for suppressing noise that originates in this echo component. Accordingly, the earphone microphone 1 can collect clear sound in which noise (and particularly the echo component of output sound) has been suppressed.
Next, the configuration of the main body part 2 will be described in detail. FIG. 3 is a cross section of the main body part 2. FIG. 4 is a front view of the main body part 2 as seen from the user's external auditory canal side. FIG. 5 is a side view of the main body part 2. FIG. 3 shows the cross sectional structure of the main body part 2 taken along the one-dot chain line III-III in FIG. 4.
As shown in FIG. 3, the main body part 2 includes a speaker 21, a microphone 22, a main body housing 23, and an ear pad 25.
The speaker 21 is a sound output component having a sound emission hole 21a that outputs output sound. The speaker 21 is electrically connected to the cable 4, and outputs output sound based on the sound signal transmitted from an electronic device (not shown), via the cable 4 and the connector 5. In FIG. 3, the sound emission hole 21a of the speaker 21 is facing in a direction that is substantially perpendicular to the lengthwise direction of the main body housing 23. However, the orientation of the speaker 21 is not limited to what is shown in FIG. 3. The speaker 21 can face in a direction that is substantially parallel to the lengthwise direction of the main body housing 23, for example.
The microphone 22 is a differential microphone having first and second sound collection holes 221a and 221b that are disposed next to each other in the lengthwise direction of the main body housing 23. The microphone 22 is electrically connected to the cable 4. There are no particular restrictions on this microphone 22. However, it can be an MEMS microphone, an ECM microphone, or the like, for example. The microphone 22 produces a first sound signal based on sound inputted to the first sound collection hole 221a, and produces a second sound signal based on sound inputted to the second sound collection hole 221b. The microphone 22 also produces a differential sound signal based on the difference between the sound pressure of sound inputted to the first sound collection hole 221a and the sound pressure of sound inputted to the second sound collection hole 221b. The microphone 22 outputs these signals to the electronic device (not shown) via the cable 4 and the connector 5.
The main body housing 23 holds the one speaker 21 and the microphone 22. As shown in FIGS. 3 to 5, an insertion component 23a is formed in the main body housing 23. With this insertion component 23a, first and second openings 231a and 231b for inputting and outputting sound to and from the earphone microphone 1 are formed concentrically, as shown in FIG. 4, on the face that is opposite the eardrum E1 when the main body part 2 is mounted in the ear EAR of the user as shown in FIG. 2.

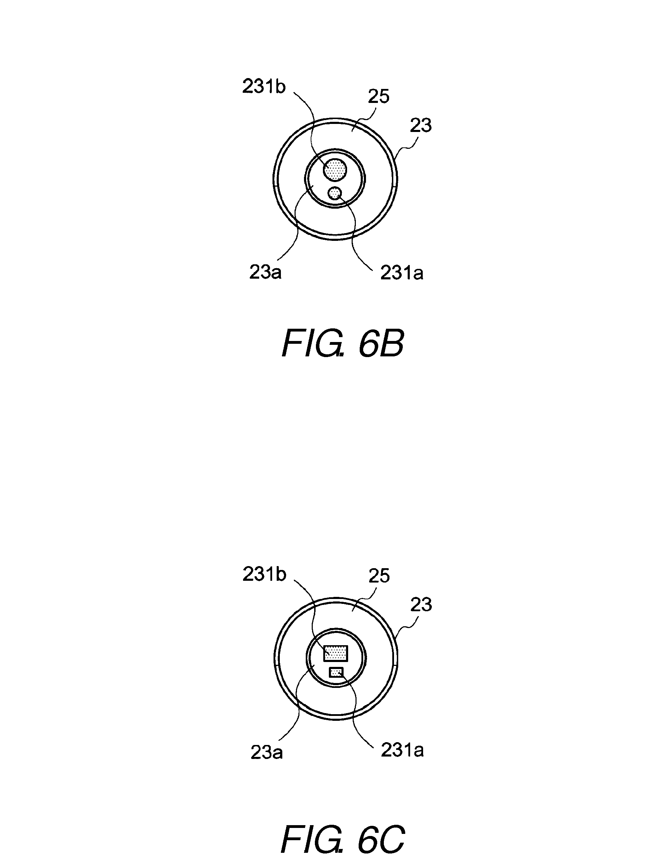

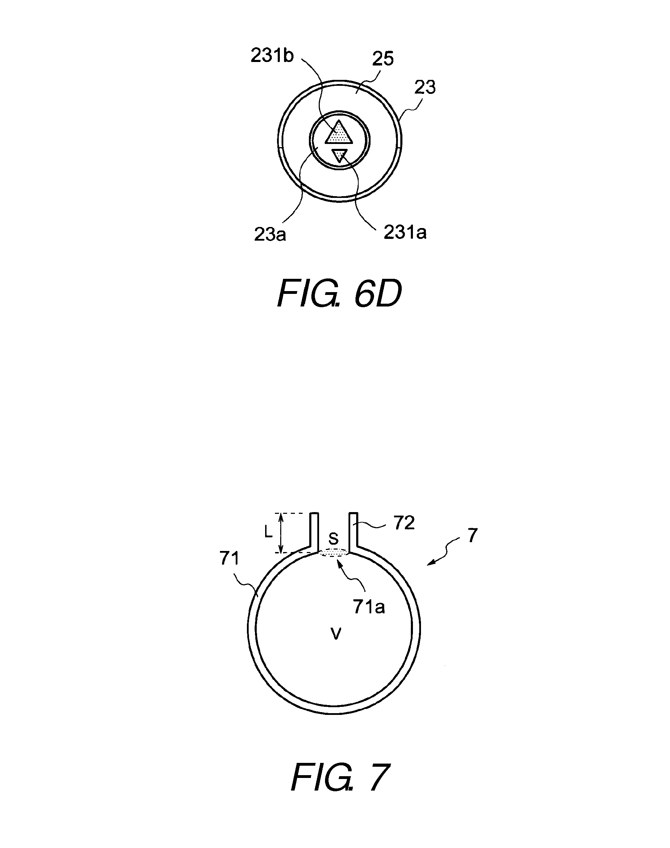

There are no particular restrictions on the shape of the first and second openings 231a and 231b formed in the insertion component 23a. FIGS. 6A to 6D are front view of other formation examples of the first and second openings 231a and 231b. As shown in FIGS. 6A to 6D, the first and second openings 231a and 231b can be two openings that are a specific distance apart, for instance. Also, the shape of the first and second openings 231a and 231b can be semicircular (see FIG. 6A), circular (see FIG. 6B), quadrangular (see FIG. 6C), triangular (see FIG. 6D), or some other polyhedral shape. Also, the shape and size of the first and second openings 231a and 231b can be substantially the same for both, or can be different.

As shown in FIG. 3, first and second acoustic spaces 232a and 232b are formed in the interior of the main body housing 23. In other words, the main body housing 23 has first and second chambers or cavities that define the first and second acoustic spaces 232a and 232b, respectively. The first and second chambers are isolated with respect to each other within the main body housing 23. The first and second chambers communicate with the first and second openings 231a and 231b, respectively.

The first acoustic space 232a communicates with the first sound collection hole 221a and the first opening 231a, and is an acoustic space in which sound inputted to the first sound collection hole 221a propagates. Sound propagates from the outside of the main body housing 23, through the first opening 231a, to the first acoustic space 232a. This sound is, for example, an echo component of the output sound of the speaker 21, input sound from an external sound source (such as the user's speaking voice that propagates through the eardrum E1 and the external auditory canal E2), or the like. The first acoustic space 232a guides these sounds to the first sound collection hole 221a.

The second acoustic space 232b communicates with the second sound collection hole 221b and the second opening 231b, and is an acoustic space in which sound inputted to the second sound collection hole 221b propagates. The speaker 21 is disposed in this second acoustic space 232b. Accordingly, the output sound of the speaker 21 propagates through the second acoustic space 232b and the second opening 231b to the outside of the main body housing 23, and is directly inputted to the second sound collection hole 221b.

The first and second acoustic spaces 232a and 232b also function as a Helmholtz resonator 7 on sound that propagates through the first and second openings 231a and 231b. The Helmholtz resonator 7 will be briefly described here. FIG. 7 is a diagram of the principle behind the Helmholtz resonator 7. The Helmholtz resonator 7 includes a container 71 and a cylindrical neck 72. The container 71 has a volume V, and includes an opening 71a of cross sectional area S. The neck 72 has a length L, and communicates with the opening 71a. When sound propagates from the outside, through the neck 72 and the opening 71a, to the inside of the container 71, this sound resonates at a

Helmholtz resonance frequency f. This Helmholtz resonance frequency f is given by the following Equation (1)

$$f = (C/2\pi) * \{S/(L*V)\}^{1/2} \qquad (1)$$

In Equation (1), C is the speed of sound.

As shown in Equation (1), the Helmholtz resonance frequency f is proportional to the square root of the cross sectional area S of the neck 72, and is inversely proportional to the square root of the the path length L of the neck 72. In particular, the Helmholtz resonance frequency f is inversely proportional to the square root of the volume V of the container 71. Accordingly, the smaller is the volume of the container 71, the higher is the frequency band in which the Helmholtz resonance frequency f appears. In this embodiment, the cross sectional areas S1 and S2 of the first and second openings 231a and 231b as seen in the lengthwise direction of the main body housing 23 correspond to the cross sectional area S of the opening 71a of the Helmholtz resonator 7. Also, the path lengths L1 and L2 of the first and second openings 231a and 231b in the lengthwise direction of the main body housing 23 correspond to the path length L of the neck 72 of the Helmholtz resonator 7. Also, the volumes V1 and V2 of the first and second acoustic spaces 232a and 232b correspond to the volume V of the container 71 of the Helmholtz resonator 7. Accordingly, sound that propagates from the outside of the main body housing 23, through the first and second openings 231a and 231b, to the first and second acoustic spaces 232a and 232b resonates at the Helmholtz resonance frequencies f1 and f2 given by the above-mentioned Equation (1).

In this embodiment, the cross sectional area S1 of the first opening 231a with which the first acoustic space 232a communicates is 0.7 to 3.2 mm$^2$, for example, and the path length L1 of the first opening 231a in the lengthwise direction of the main body housing 23 is 0.2 to 2.0 mm, for example. The volume V1 of the first acoustic space 232a is 3.5 to 60 mm$^3$, for example. Therefore, the Helmholtz resonance frequency f1 of sound that propagates from the outside of the main body housing 23, through the first opening 231a, to the first acoustic space 232a is roughly 4 kHz or higher, and appears outside of the frequency band in which the microphone 22 is generally used (such as 300 Hz to 3.4 kHz).

Also, in this embodiment, the cross sectional area S2 of the second opening 231b with which the second acoustic space 232b communicates is 0.7 to 12 mm$^2$, for example, and the path length L2 of the second opening 231b in the lengthwise direction of the main body housing 23 is 0.2 to 4.0 mm, for example. The volume V2 of the second acoustic space 232b is 300 to 2400 mm$^3$, for example. Therefore, the Helmholtz resonance frequency f2 of sound that propagates from the outside of the main body housing 23, through the second opening 231b, to the second acoustic space 232b appears within the frequency band in which the microphone 22 is generally used.

The volumetric ratio (V2/V1) of the first and second acoustic spaces 232a and 232b can be a numerical value within a range derived from the above-mentioned volumes V1 and V2. For example, in actual practice, the volumetric ratio (V2/V1) is between 5.0 and 800.

Thus, in this embodiment, the volume V1 of the first acoustic space 232a is less than the volume V2 of the second acoustic space 232b. Accordingly, the Helmholtz resonance frequency f1 in the first acoustic space 232a appears in a higher frequency band than the Helmholtz resonance frequency f2 in the second acoustic space 232b.

The ear pad 25 is formed from a plastic material, for example, and covers the insertion component 23a. When the main body part 2 is placed in the ear EAR of the user (see FIG. 2), the ear pad 25 is inserted along with the insertion component 23a into the external auditory canal E2 of the user. The ear pad 25 provides a good seal so that there is substantially no gap between the insertion component 23a and the opening of the user's external auditory canal E2. Therefore, external sound that comes in from between the insertion component 23a and the opening of the external auditory canal E2 can be substantially blocked.

Next, the echo suppression function of the earphone microphone 1 will be described for when the output sound of the speaker 21 is collected by the microphone 22, and for when input sound from an external sound source (such as the user's speaking voice) is collected by the microphone 22.

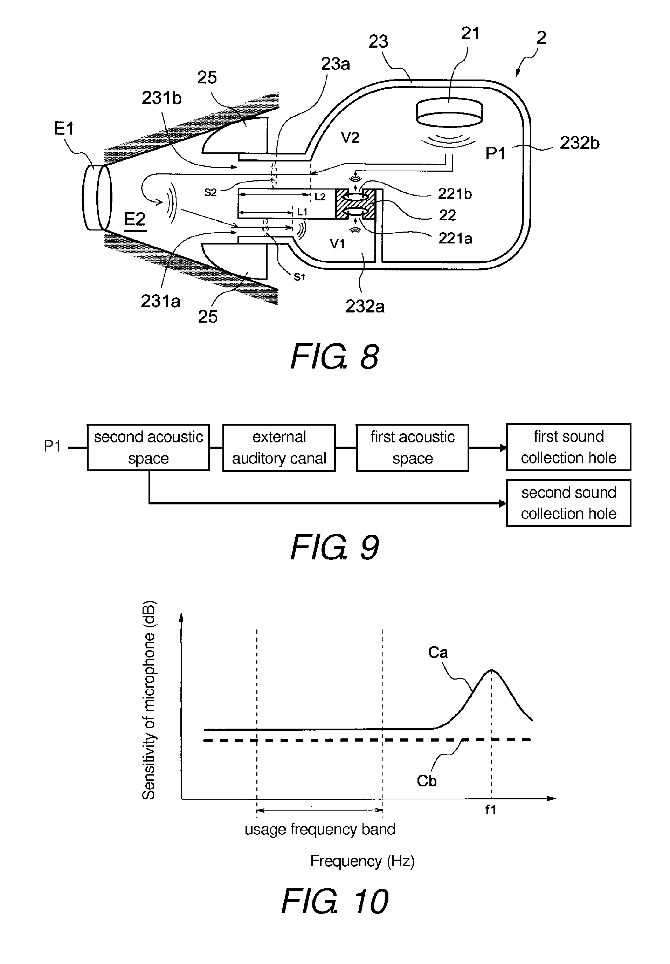

First, we will describe the situation when the output sound of the speaker 21 is collected by the microphone 22. FIG. 8 is a conceptual configuration diagram illustrating the principle behind a mechanism for suppressing an echo component. FIG. 9 is a block diagram of the collection of output sound. FIG. 10 is a graph illustrating the principle behind a mechanism for suppressing an echo component. The solid line Ca in FIG. 10 is the curve of frequency characteristics of the sensitivity of the microphone 22 with respect to sound inputted to the first sound collection hole 221a. The broken line Cb in FIG. 10 is the curve of frequency characteristics of the sensitivity of the microphone 22 with respect to sound inputted to the second sound collection hole 221b. FIG. 10 shows the curves Ca and Cb in an ideal state in order to facilitate an understanding of the principle behind the mechanism for suppressing the echo component.

As shown in FIGS. 8 and 9, the output sound of sound pressure P1 outputted from the speaker 21 is emitted from the speaker 21, through the second acoustic space 232b and the second opening 231b, to the external auditory canal E2. The emitted output sound reverberates against the inner walls of the eardrum E1 and external auditory canal E2 of the user. The reverberated output sound propagates as an echo component through the first opening 231a to the first acoustic space 232a, and is inputted to the first sound collection hole 221a.

Here, the Helmholtz resonance causes the sensitivity of the microphone 22 to be higher in the frequency band near the Helmholtz resonance frequency f1 of the echo component that propagates to the first acoustic space 232a. However, the volume of the first acoustic space 232a is tiny, as discussed above. Accordingly, the Helmholtz resonance frequency f1 appears in a frequency band that is higher than the usage frequency band (such as 300 Hz to 3.4 kHz) in which the microphone 22 collects sound, as indicated by the curve Ca in FIG. 10. Therefore, the sensitivity of the microphone 22 is higher in a frequency band that is higher than the usage frequency band, but is substantially flat (not high) in the usage frequency band.

Meanwhile, as shown in FIGS. 8 and 9, the output sound of the speaker 21 is inputted from the speaker 21 to the second sound collection hole 221b inside the second acoustic space 232b. Accordingly, the output sound inputted to the second sound collection hole 221b is not affected by the Helmholtz resonance phenomenon. Therefore, the sensitivity of the microphone 22 is flat (not high) in the entire frequency band, including the usage frequency band, as indicated by the curve Cb in FIG. 10.

Thus, in the usage frequency band of the microphone 22, sounds inputted to the first and second sound collection holes 221a and 221b weaken each other, and this suppresses the echo component of the output sound of the speaker 21 inputted to the microphone 22.

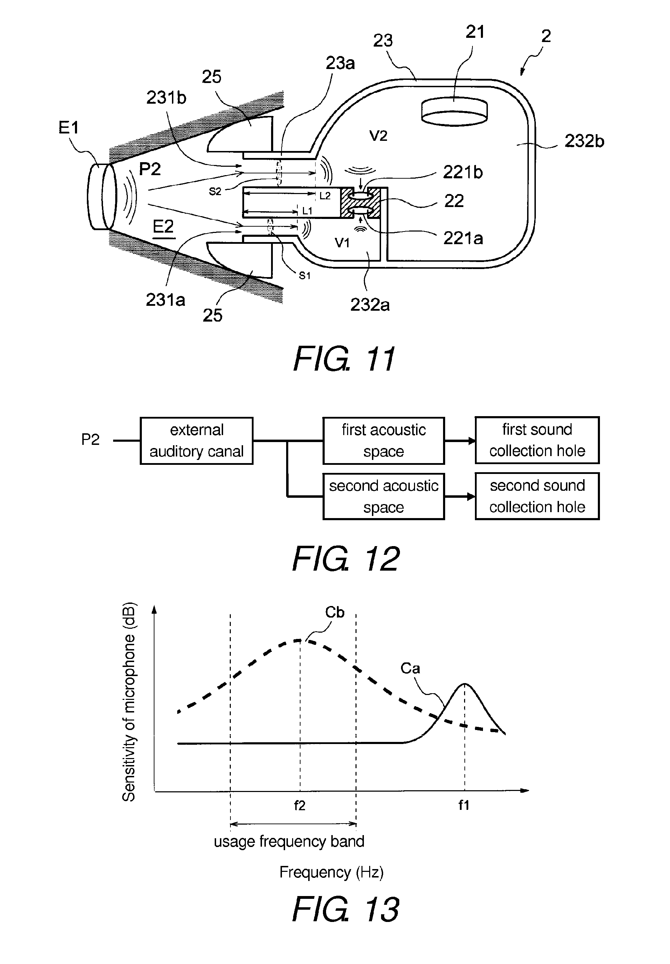

Next, we will describe the situation when input sound from an external sound source (such as the user's speaking voice) is collected by the microphone 22. FIG. 11 is a conceptual configuration diagram illustrating the principle behind a mechanism by which a microphone collects input sound. FIG. 12 is a block diagram of the collection of input sound. FIG. 13 is a graph illustrating the principle behind a mechanism by which a microphone collects input sound. In FIG. 13, a curve Ca indicating the frequency characteristics for the sensitivity of the microphone 22 with respect to sound inputted to the first sound collection hole 221a is indicated by a solid line. A curve Cb indicating the frequency characteristics for the sensitivity of the microphone 22 with respect to sound inputted to the second sound collection hole 221b is indicated by a broken line. FIG. 13 shows the curves Ca and Cb in an ideal state in order to facilitate an understanding of the principle behind the mechanism by which the microphone 22 collects the input sound.

As shown in FIGS. 11 and 12, when the earphone microphone 1 is put into the external auditory canal E2 of the user as shown in FIG. 2, input sound of sound pressure P2 propagates from the eardrum E1 and the external auditory canal E2, through the first opening 231a, to the first acoustic space 232a, and is inputted to the first sound collection hole 221a.

Here, the Helmholtz resonance causes the sensitivity of the microphone 22 to be higher in the frequency band near the Helmholtz resonance frequency f1 of the input sound that propagates to the first acoustic space 232a. However, the volume of the first acoustic space 232a is tiny, as discussed above. Accordingly, the Helmholtz resonance frequency f1 appears in a frequency band that is higher than the usage frequency band in which the microphone 22 collects sound, as indicated by the curve Ca in FIG. 13. Therefore, the sensitivity of the microphone 22 is higher outside of the usage frequency band, but is substantially flat (not high) in the usage frequency band.

Meanwhile, as shown in FIGS. 11 and 12, input sound of sound pressure P2 also propagates from the eardrum E1 and the external auditory canal E2, through the second opening 231b, to the second acoustic space 232b, and is inputted to the second sound collection hole 221b.

Here, the Helmholtz resonance causes the sensitivity of the microphone 22 to be higher in the frequency band near the Helmholtz resonance frequency f2 of the input sound that propagates to the second acoustic space 232b. As discussed above, the volume V2 of the second acoustic space 232b is far larger than the volume V1 of the first acoustic space 232a. Accordingly, the Helmholtz resonance frequency f2 appears within the usage frequency band in which the microphone 22 collects sound, as indicated by the curve Cb in FIG. 13. Therefore, the sensitivity of the microphone 22 is higher in the usage frequency band.

Thus, at least in the usage frequency band of the microphone 22, a large difference appears in the sensitivity of the microphone 22 with respect to the input sound inputted to the first and second sound collection holes 221a and 221b. Accordingly, the input sounds inputted to the first and second sound collection holes 221a and 221b do not cancel each other out. Therefore, the microphone 22 can collect the input sound. That is, the earphone microphone 1 can transmit the input sound from an external sound source (such as the user's speaking voice) to an electronic device (not shown).

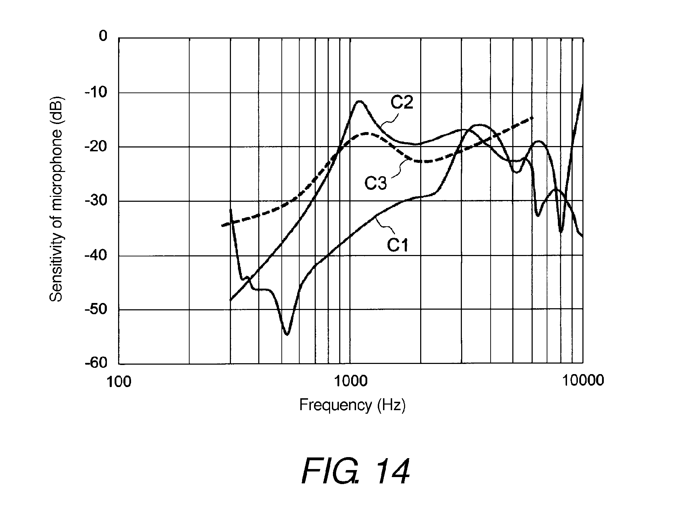

Referring now to FIG. 14, suppression of the echo component will be described in detail. In actual practice, the microphone 22 simultaneously collects the output sound of the speaker 21 and the input sound from an external sound source (such as the user's speaking voice). FIG. 14 is a graph of examples of microphone sensitivity characteristics in an embodiment. The solid line C1 in FIG. 14 is a curve showing an example of the frequency characteristics of the sensitivity of the microphone 22 when the output sound of the speaker 21 (or its echo component) is inputted to the microphone 22. The solid line C2 is a curve showing an example of the frequency characteristics of the sensitivity of the microphone 22 when the input sound from an external sound source (the user's input sound) is inputted to the microphone 22. The broken line C3 is a curve showing an example of the frequency characteristics of the sensitivity of the microphone 22 with respect to the input sound when the earphone microphone 1 is worn in the ear.

In FIG. 14, the sensitivity indicated by the curve C1 is at least 10 dB lower than that in the curves C2 and C3 in the frequency band near the Helmholtz resonance frequency f2 in the second acoustic space 232b. The earphone microphone 1 thus exhibits a good echo suppression function.

In the curves C2 and C3, since the Helmholtz resonance frequency f2 close to 1 kHz, high sensitivity is obtained in a frequency band (such as 1 to 2 kHz) near the Helmholtz resonance frequency f2. Thus, the earphone microphone 1 can transmit the input sound from an external sound source to an electronic device at a sound pressure level corresponding to the sensitivity of the microphone 22.

In the curve C2, the sensitivity of the microphone 22 on the low frequency side is lower than that on the high frequency side, but this actually poses no problem. This is because when the earphone microphone 1 is placed in the ear (see FIG. 2), the sensitivity on the low frequency side will be higher, as indicated by the curve C3 in FIG. 14.

In this embodiment, the earphone microphone 1 includes the single speaker 21, the microphone 22 (differential microphone) having the first and second sound collection holes 221a and 221b, and the main body housing 23. The first and second openings 231a and 231b (which communicate with the outside), the first acoustic space 232a (which communicates with the first opening 231a), and the second acoustic space 232b (which communicates with the second opening 231b) are formed in the main body housing 23. Sound inputted to the first sound collection hole 221a propagates to the first acoustic space 232a. The speaker 21 is disposed in the second acoustic space 232b, and sound inputted to the second sound collection hole 221b propagates to the second acoustic space 232b. The second acoustic space 232b also functions as the Helmholtz resonator 7 with respect to sound that propagates through the second opening 231b.

With this configuration, the earphone microphone 1 is equipped with the single speaker 21. Also, the first and second acoustic spaces 232a and 232b communicate with the outside of the main body housing 23 via the first and second openings 231a and 231b, respectively. The speaker 21 is disposed in the second acoustic space 232b. The second acoustic space 232b also functions as the Helmholtz resonator 7 with respect to sound that propagates through the second opening 231b. Accordingly, input sound from an external sound source is inputted to the second sound collection hole 221b after resonating in the second acoustic space 232b. At this point, a difference occurs in the sound pressures of the input sounds inputted to the first and second sound collection holes 221a and 221b in a frequency band near the Helmholtz resonance frequency f2 in the second acoustic space 232b. Therefore, the input sounds inputted to the first and second sound collection holes 221a and 221b are collected by the microphone 22 without canceling each other out. The output sound of the speaker 21 is inputted to the first sound collection hole 221a through the second acoustic space 232b, the second opening 231b, the outside of the main body housing 23, the first opening 231a, and the first acoustic space 232a. Also, output sound is directly inputted to the second sound collection hole 221b inside the second acoustic space 232b. The collection of output sound is suppressed when the output sounds of the speaker 21 inputted to the first and second sound collection holes 221a and 221b weaken each other. Therefore, the earphone microphone 1 can have an echo suppression function on the output sound of the speaker 21 without a plurality of speakers 21 being needed. Furthermore, the earphone microphone 1 can transmit input sound while suppressing noise (echo component) originating in the output sound of the speaker 21. Therefore, the earphone microphone 1 can be provided that can be made compact and has an inexpensive echo suppression function.

Also, in this embodiment, the first acoustic space 232a functions as the Helmholtz resonator 7 on sound that propagates through the first opening 231a. Also, the volume V2 of the second acoustic space 232b is larger than that of the first acoustic space 232a.

With this configuration, sound that propagates from the outside of the main body housing 23, through the first and second openings 231a and 231b, to the first and second acoustic spaces 232a and 232b resonates by the Helmholtz resonance. Furthermore, the volume V2 of the second acoustic space 232b is larger than the volume V1 of the first acoustic space 232a. Accordingly, depending on the volumetric ratio (V2/V1) of the first and second acoustic spaces 232a and 232b, the Helmholtz resonance frequency f1 of the first acoustic space 232a will appear in a frequency band that is higher than the Helmholtz resonance frequency f2 of the second acoustic space 232b. Therefore, input sounds from an external sound source inputted to the first and second sound collection holes 221a and 221b can be kept from canceling each other out in the entire frequency band, including the Helmholtz resonance frequency f2 of the second acoustic space 232b. Since the speaker 21 is disposed in the second acoustic space 232b, the output sound of the speaker 21 inputted to the second sound collection hole 221b does not resonate. Therefore, in the above-mentioned frequency band, the output sounds of the speaker 21 inputted to the first and second sound collection holes 221a and 221b can weaken each other. Thus, the earphone microphone 1 can transmit input sound from an external sound source inputted to the microphone 22 while suppressing noise originating in the output sound of the speaker 21.

Furthermore, in this embodiment, the volumetric ratio (V2/V1) of the first and second acoustic spaces 232a and 232b is set so that sound that propagates through the first opening 231a to the first acoustic space 232a will not resonate, at least not within a specific frequency band. The volumetric ratio (V2/V1) is also set so that sound that propagates through the second opening 231b to the second acoustic space 232b will resonate within a specific frequency band. The effect of this is that input sounds from an external sound source inputted to the first and second sound collection holes 221a and 221b will not cancel each other out in a specific frequency band. Furthermore, output sounds of the speaker 21 inputted to the first and second sound collection holes 221a and 221b can weaken each other. Therefore, the earphone microphone 1 can have an echo suppression function in a specific frequency band, such as the usage frequency band of the microphone 22, for example.

Also, in this embodiment, the volumetric ratio (V2/V1) of the second acoustic space 232b to the first acoustic space 232a is preferably at least 5 and no more than 800. If this is done, the Helmholtz resonance frequency f1 in the first acoustic space 232a can be made sufficiently greater than the Helmholtz resonance frequency f2 in the second acoustic space 232b for sound that propagates through the first and second openings 231a a and 231b to the first and second acoustic spaces 232a and 232b. Therefore, the earphone microphone 1 can reliably have an echo suppression function.

Also, in this embodiment, the Helmholtz resonance frequency f1 of sound that propagates through the first opening 231a to the first acoustic space 232a is at least 4 kHz. Also, the Helmholtz resonance frequency f2 of sound that propagates through the second opening 231b to the second acoustic space 232b is at least 1 kHz and no more than 2 kHz. If this is done, the Helmholtz resonance frequency f1 of sound that propagates through the first opening 231a to the first acoustic space 232a can be excluded from the usage frequency band of the microphone 22 (such as 300 to 3.4 Hz). Furthermore, the Helmholtz resonance frequency f2 of sound that propagates through the second opening 231b to the second acoustic space 232b can be included in the usage frequency band of the microphone 22. Therefore, in the usage frequency band of the microphone 22, the earphone microphone 1 can suppress noise originating in the output sound of the speaker 21, while transmitting the input sound from an external sound source that is inputted to the microphone 22.

One embodiment of the present invention is described above. The above embodiment is just an example. Various modifications can be made to the constituent elements and the combination of processing therein, and it will be understood by a person skilled in the art that these are within the scope of the present invention.

For instance, in the above embodiment, the microphone 22 having the two sound collection holes 221a and 221b is built into the main body part 2. However, the applicable scope of the present invention is not limited to or by this example. The microphone 22 can be formed by a first microphone having the first sound collection hole 221a, and a second microphone having the second sound collection hole 221b. Also, the earphone microphone 1 can produce a differential sound signal based on first and second sound signals using a control circuit (not shown). Alternatively, a differential sound signal can be produced by an electronic device (not shown) connected to the earphone microphone 1.

Also, in the above embodiment, the earphone microphone 1 includes the single main body part 2 as in FIG. 1. However, the applicable scope of the present invention is not limited to or by this example. The earphone microphone 1 can include two main body parts 2. Furthermore, one of the two main body parts 2 does not need to have the echo suppression function. In other words, the speaker 21 can be installed to the one of the main body parts 2, but the microphone 22 does not need to be installed to the one of the main body parts 2. This allows the user to hear the output sound of the earphone microphone 1 in both ears.

Also, in the above embodiment, the first acoustic space 232a functions as a Helmholtz resonator 7. However, the applicable scope of the present invention is not limited to or by this example. The first acoustic space 232a can be an acoustic space that functions as a cylindrical resonator. Here again, the first acoustic space 232a will be tiny, so just as in FIGS. 10 and 13, the resonance frequency f1 in the first acoustic space 232a will appear outside the usage frequency band of the microphone 22. Therefore, there will be an echo suppression function on output sound from the speaker 21, and an input sound in which the echo component of the output sound has been suppressed by this echo suppression function can be transmitted to an electronic device (not shown).

In the illustrated embodiment, the first and second acoustic spaces 232a and 232b are isolated with respect to each other within the main body housing 23, as shown in FIGS. 3, 8 and 11. The second acoustic space 232b is circumferentially disposed about the first acoustic space 232a, as shown in FIG. 3. The first and second openings 231a and 231b are isolated with respect to each other within the main body housing 23, as shown in FIGS. 3, 8 and 11. The first and second openings 231a and 231b are coaxially arranged with respect to each other, as shown in FIGS. 3 and 4.

In the illustrated embodiment, an earphone microphone includes a main body housing, a differential microphone, and a speaker. The main body housing defines first and second acoustic spaces therewithin. The main body housing has a first opening that communicates the first acoustic space with an outside of the main body housing and a second opening that communicates the second acoustic space with the outside of the main body housing. The second acoustic space forms a Helmholtz resonator relative to sound propagating through the second opening. The differential microphone has first and second sound collection holes. The first and second sound collection holes communicate with the first and second acoustic spaces, respectively. The speaker is disposed in the second acoustic space.

Furthermore, the differential microphone is arranged relative to the main body housing such that sound propagating in the first acoustic space is inputted to the first sound collection hole, and such that sound propagating in the second acoustic space is inputted to the second sound collection hole.

With this configuration, the earphone microphone includes the single speaker. Also, the first and second acoustic spaces communicate with the exterior of the main body housing via the first and second openings, respectively. Also, the speaker is disposed in the second acoustic space. Also, the second acoustic space functions as a Helmholtz resonator on sound that propagates through the second opening. Accordingly, sound inputted from an external sound source resonates in the second acoustic space, after which it is inputted to the second sound collection hole. At this point, there is a difference in the sound pressure of the sound inputted to the first and second sound collection holes in a frequency band near the resonance frequency in the second acoustic space. Therefore, the sounds inputted to the first and second sound collection holes do not cancel each other out, and are collected by the differential microphone. Also, the output sound of the speaker is inputted to the first sound collection hole through the second acoustic space, the second opening, the outside of the main body housing, the first opening, and the first acoustic space. Also, the output sound is directly inputted to the second sound collection hole inside the second acoustic space. The output sounds inputted to the first and second sound collection holes weaken each other, which suppresses the collection of output sound. Therefore, the earphone microphone does not need a plurality of speakers, and has the function of echo suppression on the output sound of the speaker. Furthermore, the earphone microphone can transmit input sound while suppressing noise originating in the output sound of the speaker. Thus, an earphone microphone can be provided that can be made compact and has an inexpensive echo suppression function.

In the illustrated embodiment, the first acoustic space forms a Helmholtz resonator relative to sound propagating through the first opening. The second acoustic space has a volume that is greater than a volume of the first acoustic space.

With this configuration, sound that propagates from the outside of the main body housing, through the first and second openings, to the first and second acoustic spaces resonates by Helmholtz resonation. Furthermore, the volume of the second acoustic space is greater than the volume of the first acoustic space. Accordingly, because of the volumetric ratio between the first and second acoustic spaces, the resonance frequency of the first acoustic space appears in a higher frequency band than the resonance frequency of the second acoustic space. Therefore, in a frequency band that includes the resonance frequency of the second acoustic space, the input sounds from external sound sources inputted to the first and second sound collection holes can be kept from canceling out each other. Since the speaker is disposed in the second acoustic space, output sound from the speaker that is inputted to the second sound collection hole does not resonate. Therefore, in the above-mentioned frequency band, the output sounds from the speaker that are inputted to the first and second sound collection holes can weaken each other. Thus, the earphone microphone suppresses noise originating in the output sound of the speaker, while transmitting input sound from an external sound source inputted to the differential microphone.

In the illustrated embodiment, the first acoustic space is configured such that sound propagating through the first opening to the first acoustic space does not resonate within at least a specific frequency band. The second acoustic space is configured such that the sound propagating through the second opening to the second acoustic space resonates within the specific frequency band.

Also, the first acoustic space is configured such that the sound propagating through the first opening to the first acoustic space resonates at a frequency that is higher than the specific frequency band.

With this configuration, input sound from external sound sources that is inputted to the first and second sound collection holes will not cancel out each other in a specific frequency band. Furthermore, the output sound of the speaker that is inputted to the first and second sound collection holes can weaken each other. Therefore, the earphone microphone will have an echo suppression function in a specific frequency band, such as the usage frequency band of the differential microphone, for example.

In the illustrated embodiment, the main body housing is configured such that a volumetric ratio of the second acoustic space with respect to the first acoustic space is at least 5 and no more than 800.

With this configuration, the resonance frequency in the first acoustic space with respect to sound that propagates through the first and second openings to the first and second acoustic spaces can be made sufficiently higher than the resonance frequency in the second acoustic space. Therefore, the earphone microphone will reliably have an echo suppression function.

In the illustrated embodiment, the first acoustic space is configured such that a resonance frequency of sound propagating through the first opening to the first acoustic space is at least 4 kHz. The second acoustic space is configured such that a resonance frequency of the sound propagating through the second opening to the second acoustic space is at least 1 kHz and no more than 2 kHz.

With this configuration, a resonance frequency of sound that propagates through the first opening to the first acoustic space can be excluded from the usage frequency band of the differential microphone (such as 300 to 3.4 Hz). Furthermore, the resonance frequency of sound that propagates through the second opening to the second acoustic space can be included in the usage frequency band of the differential microphone. Therefore, in the usage frequency band of the differential microphone, the earphone microphone can suppress noise originating in the output sound of the speaker, while transmitting the input sound from an external sound source that is inputted to the differential microphone.

In the illustrated embodiment, the first and second acoustic spaces are isolated with respect to each other within the main body housing. The second acoustic space is circumferentially disposed about the first acoustic space. The first and second openings are isolated with respect to each other within the main body housing. The first and second openings are coaxially arranged with respect to each other.

With the earphone microphone, an earphone microphone can be provided that can be made compact and has an inexpensive echo suppression function.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of an earphone microphone in a normal wearing position.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only a selected embodiment has been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiment according to the present invention are provided for illustration only, and not for the purpose of limiting the invention as defined by the appended claims and their equivalents.

**Claims**

1. An earphone microphone comprising
   a main body housing defining first and second acoustic spaces therewithin, the main body housing having a first opening that communicates the first acoustic space with an outside of the main body housing and a second opening that communicates the second acoustic space with the outside of the main body housing, with the second acoustic space forming a Helmholtz resonator relative to sound propagating through the second opening;
   a differential microphone having first and second sound collection holes, the first and second sound collection holes communicating with the first and second acoustic spaces, respectively; and
   a speaker disposed in the second acoustic space.

2. The earphone microphone according to claim 1, wherein
   the differential microphone is arranged relative to the main body housing such that sound propagating in the first acoustic space is inputted to the first sound collection hole, and such that sound propagating in the second acoustic space is inputted to the second sound collection hole.

3. The earphone microphone according to claim 1 or 2, wherein
   the first acoustic space forms a Helmholtz resonator relative to sound propagating through the first opening, and
   the second acoustic space has a volume that is greater than a volume of the first acoustic space.

4. The earphone microphone according to any one of claims 1 to 3, wherein
   the first acoustic space is configured such that sound propagating through the first opening to the first acoustic space does not resonate within at least a specific frequency band, and
   the second acoustic space is configured such that the sound propagating through the second opening to the second acoustic space resonates within the specific frequency band.

5. The earphone microphone according to any one of claims 1 to 4, wherein
   the first acoustic space is configured such that the sound propagating through the first opening to the first acoustic space resonates at a frequency that is higher than the specific frequency band.

6. The earphone microphone according to any one of claims 1 to 5, wherein
   the main body housing is configured such that a volumetric ratio of the second acoustic space with respect to the first acoustic space is at least 5 and no more than 800.

7. The earphone microphone according to any one of claims 1 to 6, wherein
   the first acoustic space is configured such that a resonance frequency of sound propagating through the first opening to the first acoustic space is at least 4 kHz, and
   the second acoustic space is configured such that a resonance frequency of the sound propagating through the second opening to the second acoustic space is at least 1 kHz and no more than 2 kHz.

8. The earphone microphone according to any one of claims 1 to 7, wherein
the first and second acoustic spaces are isolated with respect to each other within the main body housing.

9. The earphone microphone according to any one of claims 1 to 8, wherein
the second acoustic space is circumferentially disposed about the first acoustic space.

10. The earphone microphone according to any one of claims 1 to 9, wherein
the first and second openings are isolated with respect to each other within the main body housing.

11. The earphone microphone according to any one of claims 1 to 10, wherein
the first and second openings are coaxially arranged with respect to each other.

**FIG. 1**

**FIG. 2**

FIG. 3

FIG. 4

FIG. 5

FIG. 6A

FIG. 6B

FIG. 6C

FIG. 6D

FIG. 7

EP 2 768 239 A1

FIG. 8

| P1 | second acoustic space | external auditory canal | first acoustic space | first sound collection hole |
| | | | | second sound collection hole |

FIG. 9

FIG. 10

17

**FIG. 11**

**FIG. 12**

**FIG. 13**

FIG. 14

**EUROPEAN SEARCH REPORT**

Europäisches Patentamt
European Patent Office
Office européen des brevets

Application Number

EP 14 15 4458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/102464 A1 (SHIN DOO SIK [KR]) 2 August 2012 (2012-08-02) * paragraphs [0073] - [0085]; figures 2,9-11 * & US 2013/315415 A1 (SHIN DOO SIK [KR]) 28 November 2013 (2013-11-28) ----- | 1-11 | INV. H04R1/08 H04R1/10 H04M1/19 |
| A | WO 2012/120295 A1 (SOUNDCHIP SA [CH]; DARLINGTON PAUL [GB]) 13 September 2012 (2012-09-13) * the whole document * ----- | 1-11 | |
| A | US 2013/028462 A1 (CHEN LU-CHENG [TW]) 31 January 2013 (2013-01-31) * the whole document * ----- | 1-11 | |

TECHNICAL FIELDS
SEARCHED (IPC)

H04R
H04M

The present search report has been drawn up for all claims

| Place of search | Date of completion of the search | Examiner |
|---|---|---|
| Munich | 11 July 2014 | Kunze, Holger |

## ANNEX TO THE EUROPEAN SEARCH REPORT
## ON EUROPEAN PATENT APPLICATION NO.

EP 14 15 4458

This annex lists the patent family members relating to the patent documents cited in  the above-mentioned European search report.
The members are as contained in the European Patent Office EDP file on
The European Patent Office is in no way liable for these particulars which are merely given for the purpose of information.

11-07-2014

| Patent document cited in search report | Publication date | Patent family member(s) | | Publication date |
|---|---|---|---|---|
| WO 2012102464 A1 | 02-08-2012 | CN | 103460714 A | 18-12-2013 |
| | | US | 2013315415 A1 | 28-11-2013 |
| | | WO | 2012102464 A1 | 02-08-2012 |
| WO 2012120295 A1 | 13-09-2012 | CN | 103416075 A | 27-11-2013 |
| | | EP | 2684381 A1 | 15-01-2014 |
| | | US | 2013343564 A1 | 26-12-2013 |
| | | WO | 2012120295 A1 | 13-09-2012 |
| US 2013028462 A1 | 31-01-2013 | TW | 201306607 A | 01-02-2013 |
| | | US | 2013028462 A1 | 31-01-2013 |

EPO FORM P0459

For more details about this annex : see Official Journal of the European Patent Office, No. 12/82

## REFERENCES CITED IN THE DESCRIPTION

**Patent documents cited in the description**

- JP 2013025246 A

- JP 2007201887 A